# EUROPEAN PATENT APPLICATION

(11) **EP 4 697 775 A1**
(43) Date of publication of application: **18.02.2026**
(21) Application number: 24223839.2
(22) Date of filing: 31.12.2024
(51) Int. Cl.: H04W 12/08, H04W 12/73, H04W 84/12

(54) **METHOD SYSTEM AND APPARATUS IN FACILITATING ANONYMOUS DATA CONNECTIVITY**

(30) Priority: 03.01.2024 US 202463617096 P
(71) Applicant: Russell, Levi, Edgware HA8 9UU (GB)
(72) Inventor: Russell, Levi, Edgware HA8 9UU (GB)

(57) **Abstract**

The present invention relates to a method, system, and apparatus for enabling anonymous access to Wi-Fi networks within a global community of wireless network hosts and guests. It enhances prior technologies by providing secure and seamless hotspot authentication, eliminating the need for guests to know the host's access credentials. A software application running on both the host and guest devices facilitates the connection, using encryption protocols to ensure security. The invention also introduces a Wi-Fi Bank, where hosts accumulate credits based on their data or time contributions, which guests can redeem for access to other participating hotspots worldwide. This system fosters a sustainable Wi-Fi sharing community, offering affordable internet connectivity and incentivizing hosts to share their networks. By eliminating physical interactions and manual password sharing, the invention makes Wi-Fi sharing more accessible, scalable, and efficient.

## Description

### BACKGROUND OF THE INVENTION

The present invention is a continuation from US patent number US9258309B2 and relates to a method of operating a wireless access point for providing access to a network. Said patent describes in a sample embodiment, a system comprising an ordinary PC connected to the Internet while acting as a hotspot gateway controller to potential guest devices.

Wifi hotspot access is now a popular means for internet and broadband data connectivity on the go. With a growing proliferation of fibre to the premises FTTP connectivity commonly known as ("full fibre") Wifi is the medium of choice to take full advantage of this increase in bandwidth to consume rich media and high demand applications such as video conferencing gaming and work from home essentials that is increasingly developed alongside the enormous drive in FTTP. The present invention is essential in order to provide a service that allows users worldwide to join a community of hosts and guests that share their wifi networks in a reciprocal fashion. In order to achieve this the present invention offers a means to anonymously securely and safely create a safe and secure environment for users in the said community to share and receive connectivity from their homes and business premises or their immediate nomadic networks.

As a continuation but not necessary limited to the invention described in patent US9258309B2 the problem solved is a means to anonymously access a wifi network using ordinary WEP or WPA encryption access means. For a guest user to access any secure or encrypted network, said user will require knowledge of the password or pass phrase but if the user is not familiarly known to the host who owns or controls the said network nor has means to communicating or even knowledge of who owns and controls the network, the user will find it difficult or often impossible to ever gain access to the hotspot host network. The present invention offers an anonymous facility to allow this to happen so that users and hosts can join a community of like minded members to share their respective networks.

The present invention provides for an "on the fly" secure anonymous hotspot authentication. The hotspot can be any ordinary wireless network or WLAN that offers security and encryption. The security provisioned would ordinarily be encryption by virtue of a password or passphrase and a guest or user would need prior knowledge of said password or passphrase to access the network. The host providing the hotspot or wireless service would share the password or passphrase with the guest through a proprietary application residing on both the host and the guest device. Access may also be provided in combination by means of either local or central authentication including but not limited to accounting or other means of affinity.

The present invention is an improvement of existing WPS features available in most common routers and modems sold today. Said WPS provides for automatic security association between host and guest devices. The present invention improves on the WPS system by obviating the need to manually instruct or facilitate the association which is usually accomplished by pressing a WPS button on the host device. Or in some instance pressing a WPS button on the guest device and corresponding by making an action by pushing a button or equivalent on the host device.

The present invention is also an improvement from other references that may be drawn from prior art in the form of software applications that house passwords or other phraseology to gain access authentication or accounting by way of central or local repositories; commonly known as password keyrings, password wallets and similar applications. The key difference in the present inventions improvements is the unique "on the fly" association between the host and guest devices. Eliminating any need to regularly update said password or passphrase repositories.

The present invention is also distinguished over existing community wifi services such as those that store user profiles and security access details to gain access via reference of said user profile and security data referenced at central server databases such as radius servers and other AAA or similar authentication servers.

The present invention is also distinguished over existing systems that employ the use of QR codes that allow a guest to scan the code and read the password to access the hotspot. The key difference in the present invention is eliminating the need for the user to have any familiarity or communication with the hotspot owner or controller, which is necessary when using a QR code.

The present invention is also distinguished over existing systems that employ the use of near field communications ("NFC") that allow a hotspot host to share the secure data via NFC or sometimes via Bluetooth with a guest device in order to access the hotspot. The key difference in the present invention is eliminating the need for the user to have any familiarity or communication with the hotspot owner or controller such as required in NFC or Bluetooth.

### SUMMARY OF THE INVENTION

The present invention provides a method of operating a hotspot network that generates a unique SSID and Password pair which is recognised in mirror fashion by guest devices, comprising:
A first computing device; running proprietary software that generates a unique SSID and password pair.
A second computing device running the same or similar proprietary software application that recognizes the generated SSID and password pair required to access the network
The method described comprise computing devices which shall mean but are not limited to PCs, laptops, desktops, tablets, smartphones, thin clients, servers or similar

According to a second aspect of the invention, there is provided a computing apparatus acting as a hotspot that generates a network name SSID and password pair: the apparatus comprising:
A PC computer, laptop, tablet or smartphone
Proprietary software
A first computing device; running said proprietary software that generates a unique SSID and password pair.
A second computing device running the same or similar proprietary software application that recognizes the generated SSID password pair required to access the network

The apparatus described is a computing device which shall mean but is not limited to PC, laptop, desktop, tablet, smartphone, thin client, server or similar.

According to a third aspect of the invention, there is hotspot system that generates a network name SSID and password pair: the system comprising:
A first computing device; running said proprietary software that generates a unique SSID and password pair.
A second computing device running the same or similar proprietary software application that recognizes the generated SSID password pair required to access the network

The system describes computing devices which shall mean but are not limited to PCs, laptops, desktops, tablets, smartphones, thin clients, and servers or similar.

### DETAILED DESCRIPTION OF THE INVENTION

In a preferred embodiment a user within range of a host network running the proprietary software application, will scan for a wifi network. The user guest device will scan and list an array of networks one of which will have a uniquely recognizable network name commonly known as an SSID. Said SSID may be presented as "xyz123-freewifihere.com" the user will be guided to visit the URL address promoted, download the necessary software application. The said application will have the unique ability to decipher the password or phraseology providing the user with access to hotspot network

In another embodiment of the present invention. A Hotspot device intending to offer guest internet access will broadcast a secure wifi network with an SSID. The SSID may comprise a combination of unique identifying attributes comprising both a prefix as part of the unique SSID identifier followed by a suffix generic identifier. The first computer device will generate a proprietary algorithmic password associated with the SSID. The guest user device will in turn employ the same algorithmic code to decipher the password or passphrase and employ said password or passphrase to gain access to the hotspot network identified by the said SSID

In a preferred embodiment, the hotspot maybe running as an ordinary persons personal computer, server or laptop.

In another embodiment, the present invention can be made available as firmware and deployed on the hosts' routers device as a standalone function or alongside router like functionality or modem like functionality.

In another embodiment of the present invention, the prefix of the SSID may comprise a set of unique noun identifiers

In another embodiment of the present invention, the suffix of the SSID may comprise a set of promotional activities or third party branding.

In another embodiment of the present invention the entire SSID may comprise a unique string that can be associated with the proprietary software by extracting key integers, characters or symbols.

In another embodiment of the present invention the user may be authenticated by way of local database referencing

In another embodiment of the present invention the user may be authenticated by way of remote database referencing.

In another embodiment of the present invention the proprietary software application residing on the guest device may be a standalone application that extracts the SSID from a wifi scan or utilizes a recognizable SSID which the software applies the proprietary algorithm to decipher the security necessary to access the hotspot network

In another embodiment of the present invention the proprietary software may interface directly with the native operating system and apply the algorithmic application necessary to give access to the guest device on the hotspot network.

In another embodiment of the present invention the guest device may constitute a headless or screen-less node that requires remote operation or a port connection from another device.

In another embodiment of the present invention the guest device may act at the same time as a host device and provide connectivity services to further guests in a chain of connectivity commonly referred to as a mesh network.

In another embodiment of the present invention, said hotspot network may be a fixed network for example a home or commercial venue like a business or retail outlet

In another embodiment, the user may be a device or node running the same software as the host or slightly different software that achieves the same result in accessing the network utilising the present invention

The present invention speaks of two devices communicating with each other. This does not preclude the possibility of one hotspot network described herein servicing internet and data connectivity to more than one guest device or an unlimited number of guest devices.

The present invention speaks of two devices with specific roles for example, host and guest. This does not preclude the possibility that either of the two devices may switch roles, or the proprietary software would interchange said roles automatically neither does this preclude the possibility that either of the two devices may switch roles assisted by unique and separate proprietary software for each role for example host software and guest software as separate functioning software applications.

Notwithstanding the present invention speaks of hotspots secured via WEP or WPA this does not limit the invention from being deployed in any other succeeding wifi security means such as secure token, public key encryption and similar means to secure wifi hotspot networks as they become available.

The present invention can be implemented in dedicated hardware, using a programmable digital controller suitably programmed, or using a combination of hardware and software.

Alternatively, the present invention can be implemented by software or programmable computing apparatus. This includes any computer, including PDA's (personal digital assistants), mobile phones, etc. The code for each process in the methods according to the invention may be modular, or may be arranged in an alternative way to perform the same function. The methods and apparatus according to the invention are applicable to any computer with a network connection.

Thus the present invention encompasses a carrier medium carrying machine readable instructions or computer code for controlling a programmable controller, computer or number of computers as An apparatus as claimed in the invention. The carrier medium can comprise any storage medium such as a floppy disk, CD ROM, DVD ROM, hard disk, magnetic tape, or programmable memory device, or a transient medium such as an electrical, optical, microwave, RF, electromagnetic, magnetic or acoustical signal. An example of such a signal is an encoded signal carrying a computer code over a communications network, e.g. a TCP/IP signal carrying computer code over an IP network such as the Internet, an intranet, or a local area network.

While the invention has been described in terms of what are at present its preferred embodiments, it will be apparent to those skilled in the art that various changes can be made to the preferred embodiments without departing from the scope of the invention, which is defined by the claims..

## Claims

1. A method of operating a hotspot network, the method comprising the steps of:
Generating a unique SSID and password pair on a first computing device operating a single network interface card or module with two sub-networks, wherein said first computing device is running proprietary software to manage the exchange of data between the two sub-networks; Providing access to a second computing device by recognizing the unique SSID and password pair generated by the first computing device, wherein the second computing device is running the same or similar proprietary software; Allowing the second computing device to access the network associated with the first computing device using the generated SSID and password pair.

2. The method of claim 1, wherein the first computing device is selected from the group consisting of: a personal computer, laptop, tablet, smartphone, thin client, server, or a similar computing device.

3. The method of claim 1, wherein the unique SSID comprises a prefix followed by a suffix, the prefix being generated algorithmically, and the suffix being used for either security purposes or promotional activities.

4. The method of claim 1, wherein the SSID is hidden, and access to the SSID is provided by the second computing device via proprietary software.

5. The method of claim 1, wherein the second computing device utilizes the proprietary software to decrypt the password or passphrase necessary for connecting to the first computing device's network.

6. The method of claim 1, wherein the access to the network is achieved through the execution of the proprietary software on the second computing device, which interfaces directly with the native operating system of the second device to apply the decryption algorithm.

7. The method of claim 1, further comprising the step of accumulating credit for time or data usage on the first computing device while it is functioning as a hotspot, wherein the accumulated credit can be redeemed by the user of the first computing device for access to other hotspot networks globally.

8. The method of claim 7, wherein credit is stored in a Wi-Fi credit account associated with the first computing device, and the credit is redeemable by accessing other hotspot networks that are part of a global hotspot community.

9. The method of claim 1, wherein the first and second computing devices are capable of exchanging roles as host and guest devices, wherein proprietary software automatically facilitates the switching of roles between the devices.

10. A computing apparatus for acting as a hotspot, the apparatus comprising:
A computing device selected from the group consisting of: a personal computer, laptop, tablet, smartphone, thin client, server, or similar; A single network interface card or module configured to operate two sub-networks; Proprietary software running on the computing device, which generates a unique SSID and password pair; A second computing device running the same or similar proprietary software that recognizes the SSID and password pair generated by the first computing device and grants access to the hotspot network.

11. The computing apparatus of claim 10, wherein the network interface card or module exchanges data between two sub-networks, and the proprietary software facilitates secure access to the second network via the generated SSID and password pair.

12. The computing apparatus of claim 10, wherein the SSID comprises a prefix and a suffix, where the prefix is algorithmically generated for security purposes and the suffix may include promotional or third-party branding.

13. The computing apparatus of claim 10, wherein the SSID is hidden and can only be recognized by the proprietary software installed on the guest device.

14. A hotspot system, the system comprising:
A first computing device operating a single network interface card or module with two sub-networks that exchange data between them, wherein the first computing device is running proprietary software that generates a unique SSID and password pair; A second computing device running proprietary software that recognizes the SSID and password pair generated by the first computing device and facilitates access to the network of the first computing device.

15. The hotspot system of claim 14, wherein the system allows both the first and second computing devices to switch roles dynamically between host and guest devices, facilitated by proprietary software.

16. The hotspot system of claim 14, wherein the system provides for Wi-Fi credit accumulation, where both the first and second computing devices accumulate time or data credit for their usage, and credits are redeemable for access to other hotspot networks worldwide.

17. The hotspot system of claim 14, wherein the guest device may operate as a mesh network node, providing access to additional guest devices and expanding the hotspot network.

18. The hotspot system of claim 14, wherein the SSID generated by the first computing device may be associated with a promotional activity or a third-party brand as part of the suffix of the SSID.

19. The hotspot system of claim 14, wherein the first computing device may also function as firmware on a router or modem device, thereby providing hotspot functionality alongside standard networking functions.

20. The hotspot system of claim 14, wherein the system uses local authentication databases for verifying the identity of guest devices and providing secure access to the network.
